# EUROPEAN PATENT SPECIFICATION

(11) **EP 3 581 410 B1**
(45) Date of publication and mention of the grant of the patent: **23.12.2020**
(21) Application number: 18774451.1
(22) Date of filing: 23.03.2018
(51) Int. Cl.: B60H 1/00, F04D 29/42, F04D 29/58, F04D 25/16

(54) **AIR-BLOWING DEVICE FOR VEHICLE AIR CONDITIONING**
LUFTBLASVORRICHTUNG ZUR FAHRZEUGKLIMATISIERUNG
DISPOSITIF DE SOUFFLAGE D'AIR POUR CLIMATISATION DE VÉHICULE

(30) Priority: 29.03.2017 JP 2017064795
(43) Date of publication of application: 18.12.2019
(73) Proprietor: Japan Climate Systems Corporation, Higashihiroshima-shi, Hiroshima 739-0153 (JP)
(72) Inventor: HIRA, Taisuke, Higashihiroshima-shi Hiroshima 739-0153 (JP); KAMOTO, Keigo, Higashihiroshima-shi Hiroshima 739-0153 (JP)
(74) Representative: Delorme, Nicolas
(86) International application number: PCT/JP2018/011694
(87) International publication number: WO 2018/180981

(56) References cited:
- EP-A1- 3 447 300
- FR-A1- 2 766 882
- FR-A1- 2 899 654
- JP-A- S6 121 817
- JP-A- S61 175 115
- JP-A- S61 184 118
- JP-A- 2000 016 050
- JP-B2- 3 823 480
- US-A1- 2017 051 750

## Description

### TECHNICAL FIELD

The present invention relates to an air-blowing device for vehicle air conditioning which is mounted in, for example, an automobile or the like and blows air for air conditioning and, in particular, belongs to a technical field of a structure which is capable of simultaneously blowing air inside a cabin and air outside the cabin.

### BACKGROUND ART

Typically, an air conditioner mounted in a vehicle selects either air inside a cabin (inside air) or air outside the cabin (outside air) to blow the selected air as air for air conditioning, and the blown air has its temperature controlled by a cooling heat exchanger and a heating heat exchanger and thereafter, is fed to areas inside the cabin.

In recent years, as an air-blowing device, for vehicle air conditioning, to blow air for air conditioning, a device which is switchable among an inside air circulation mode in which only the inside air is blown, an outside air introduction mode in which only the outside air is blown, and an inside/outside air double flow mode in which both inside air and outside air are blown has been put into practical use. That is to say, as disclosed in Patent Documents 1 to 4, a casing of an air-blowing device for vehicle air conditioning has an inside air inlet, an outside air inlet, an upper air passage, and a lower air passage. Each of the upper air passage and the lower air passage includes therein a blower fan. These two blower fans are driven by a common motor. The casing is provided with an inside/outside air switching damper for opening and closing the inside air inlet and the outside air inlet. The inside/outside air switching damper allows switching among the inside air circulation mode in which only the inside air inlet is opened, the outside air introduction mode in which only the outside air inlet is opened, and the inside/outside-air double flow mode in which the inside air inlet and the outside air inlet are opened. When the two blower fans are rotated and the inside-air circulation mode is selected, the inside air introduced through the inside air inlet flows through the upper and lower air passages. Alternatively, when the outside air introduction mode is selected, the outside air introduced through the outside air inlet flows through the upper and lower air passages. Still alternatively, when the inside/outside air double flow mode is selected, the outside air introduced through the outside air inlet flows through the upper air passage, and the inside air introduced through the inside air inlet flows through the lower air passage.

In Patent Document 4, it is disclosed that a cooling air passage through which air for cooling a motor circulates is provided. This cooling air passage is formed in such a way as to communicate with the lower air passage.

### CITATION LIST

### PATENT DOCUMENTS

Patent Document 1: Japanese Unexamined Patent Publication No. 2000-296710
Patent Document 2: Japanese Unexamined Patent Publication No. 2001-206044
Patent Document 3: Japanese Unexamined Patent Publication No. 2011-201501
Patent Document 4: Japanese Patent No. 3823480

### SUMMARY OF THE INVENTION

### TECHNICAL PROBLEM

An air blower capable of selecting the inside/outside air double flow mode as described in each of Patent Documents 1 to 4 has the following advantage. Specifically, selecting the inside/outside air double flow mode during a heating operation, for example, allows low humidity outside air introduced into the upper air passage to be supplied to the vicinity of a windshield to reduce fogging and allows the inside air introduced into the lower air passage to circulate to the vicinity of passengers' feet to enhance the heating efficiency.

However, since in the air-blowing device having the inside/outside-air double flow, the two blower fans are driven by the common motor, and an increase in a load exerted on the motor is unavoidable. Therefore, further enhancement in performance for cooling the motor is a challenge.

As described in Patent Document 4, it is considered that a cooling air passage is provided in such a way as to communicate with the lower air passage. However, if the cooling air passage is provided in such a way as to communicate with the lower air passage, the below-described problems may arise.

Specifically, as described above, the selection of the inside/outside air double flow mode is made during the heating operation. In the inside/outside air double flow mode, the inside air is introduced into the lower air passage, and since this inside air is air inside the cabin, a temperature thereof is high. With the cooling air passage communicating with the lower air passage, the air having the high temperature is supplied to the motor in the inside/outside air double flow mode. Therefore, the performance for cooling the motor is likely to be deteriorated.

In addition, in the mode in which the outside air inlet is opened, rain water and water upon vehicle washing enter an inside of the casing from the outside air inlet. This water flows into the lower air passage by gravity and stays accumulated in a bottom wall portion of the casing. All of the water accumulated in the bottom wall portion of the casing cannot be drawn out even when the blower fans are rotated, and the water easily remains accumulated in the lower air passage. Furthermore, it is considered that a water draining passage is provided to drain water accumulated in the lower air passage. However, even if the water draining passage is provided, when the blower fans are rotated, a pressure in the water draining passage becomes negative. Therefore, if the water has once accumulated in the lower air passage, it is difficult to drain the water. With the cooling air passage communicating with the lower air passage, the water accumulated in the lower air passage is likely to flow in the motor. The entry of the water in the motor may cause failure in the motor.

In view of the foregoing background, it is therefore an object of the present invention, for an air-blowing device having an inside/outside air double flow, to enhance performance for cooling a motor and not to cause any failure in the motor by reducing the entry of water into the motor.

### SOLUTION TO THE PROBLEM

In order to achieve the above-described objects, in the present invention, a cooling air passage communicates with an upper air passage.

The object of the invention is an air-blowing device for vehicle air conditioning which includes: a casing including an inside air inlet through which air inside a cabin is introduced into the casing, and an outside air inlet through which air outside the cabin is introduced into the casing, the inside air inlet and the outside air inlet opening to outside, the casing including, when mounted in a vehicle, an upper air passage and a lower air passage each communicating with both of the inside air inlet and the outside air inlet, and the casing including an inside/outside air switching damper that opens and closes the inside air inlet and the outside air inlet; an upper blower fan disposed in the upper air passage, with a rotation center line of the upper blower fan extending in an up-down direction; a lower blower fan disposed in the lower air passage, with a rotation center line of the lower blower fan extending in the up-down direction; and a motor rotationally driving the upper blower fan and the lower blower fan, air inside the upper air passage is blown as air for air conditioning by the upper blower fan, air inside the lower air passage is blown as the air for air conditioning by the lower blower fan, and an upstream end of a cooling air passage communicates with the upper air passage, the cooling air passage supplying cooling air to the motor.

In this configuration, when the inside air inlet is opened and the outside air inlet is closed by the operation of the inside/outside air switching damper, the inside air circulation mode is set to introduce the inside air from the inside air inlet. In the inside air circulation mode, the upper blower fan and the lower blower fan are rotated, whereby the inside air introduced from the inside air inlet flows into the upper air passage and the lower air passage and is blown as the air for air conditioning. In addition, when the inside air inlet is closed and the outside air inlet is opened by the operation of the inside/outside air switching damper, the outside air introduction mode is set to introduce the outside air from the outside air inlet. In the outside air introduction mode, the upper blower fan and the lower blower fan are rotated, whereby the outside air introduced from the outside air inlet flows in the upper air passage and the lower air passage and is blown as the air for air conditioning. Further, when the inside air inlet and the outside air inlet are opened by the operation of the inside/outside air switching damper, the inside/outside air double flow mode is set. In the inside/outside air double flow mode, the outside air introduced from the outside air inlet flows in one of the upper air passage and the lower air passage, and the inside air introduced from the inside air inlet flows in the other one of the upper air passage and the lower air passage, and the air is blown as the air for air conditioning.

Since the cooling air passage which supplies the cooling air to the motor communicates with the upper air passage, the air flowing in the upper air passage is supplied to the motor. In the inside/outside air double flow mode, during heating, the outside air is introduced into the upper air passage, and a temperature of this outside air is lower than that of the inside air. Accordingly, since the cooling air having the low temperature is supplied to the motor, performance for cooling the motor is enhanced.

Since the cooling air passage communicates with the upper air passage, water accumulated in the lower air passage does not flow in the motor, and the water is inhibited from entering the motor.

In an embodiment of the invention, the upstream end of the cooling air passage has an opening part in a side wall portion of the casing.

In this configuration, if the water has entered the inside of the upper air passage, the upstream end of the cooling air passage opens to the side wall portion thereof, thereby making the water inside the upper air passage less likely to flow in the cooling air passage.

In an embodiment of the invention, the casing is provided with a lower longitudinal plate part covering a lower portion of the opening part at the upstream end of the cooling air passage.

In this configuration, if the water has entered the inside of the upper air passage, a flow of the water inside the upper air passage is blocked by the lower longitudinal plate part, thereby making the water less likely to flow toward the opening part of the upstream end of the cooling air passage.

In an embodiment of the invention, the casing is provided with a partition plate partitioning an inside of the casing into the upper air passage and the lower air passage, and the partition plate is provided with the lower longitudinal plate part.

In this configuration, if the water has entered the inside of the upper air passage, the water comes to accumulate on an upper surface of the partition plate. The partition plate is provided with the lower longitudinal plate part. Hence, even if the water has accumulated on the upper surface of the partition plate, the water is less likely to flow toward the opening part of the upstream end of the cooling air passage.

In an embodiment of the invention, the casing is provided with an upper longitudinal plate part covering an upper portion at the opening part of the upstream end of the cooling air passage.

In this configuration, if the water has entered the inside of the upper air passage from above, a flow of the water is blocked by the upper longitudinal plate part, thereby making the water less likely to flow toward the opening part of the upstream end of the cooling air passage.

In an embodiment of the invention, the upper longitudinal plate part is formed in such a way as to extend from an edge portion at the opening part of the upstream end of the cooling air passage.

In this configuration, water flowing in the side wall portion of the casing is less likely to reach the opening part of the upstream end of the cooling air passage.

In an embodiment of the invention, an upper plate part is formed in the casing, the upper plate part extending from an upper edge of the opening part at the upstream end of the cooling air passage toward an inside of the upper air passage.

In this configuration, if the water has entered the inside of the upper air passage from above, a flow of the water is blocked by the upper plate part, thereby making the water less likely to flow toward the opening part of the upstream end of the cooling air passage.

### ADVANTAGES OF THE INVENTION

According to the invention, since the cooling air passage communicates with the upper air passage, performance for cooling the motor can be further enhanced, and entry of the water is reduced, thereby keeping the motor from failure.

According to an embodiment, since the upstream end of the cooling air passage has an opening part in the side wall portion of the casing, if the water has entered the inside of the upper air passage, the water inside the upper air passage is less likely to enter the cooling air passage, thereby keeping the motor from failure.

According to an embodiment, a flow of the water inside the upper air passage can be blocked by the lower longitudinal plate part, thereby making the water less likely to flow toward the opening part at the upstream end of the cooling air passage.

According to an embodiment, since the partition plate for partitioning the upper air passage and the lower air passage is provided with the longitudinal plate part, the flow of the water inside the upper air passage can be reliably blocked.

According to an embodiment, when the water has flowed from above, a flow of the water can be blocked by the upper longitudinal plate part and the water is less likely to flow toward the opening part of the upstream end of the cooling air passage.

According to an embodiment, since the upper longitudinal plate part extends from the edge portion of the opening part at the upstream end of the cooling air passage, the water flowing in the side wall portion of the casing is less likely to reach the opening part of the cooling air passage.

According to an embodiment, since the upper plate part extending from the upper edge of the opening part of the upstream end of the cooling air passage toward the inside of the upper air passage is formed, when the water has flowed from above, a flow of the water can be blocked by the upper plate part.

### BRIEF DESCRIPTION OF THE DRAWINGS

[FIG. 1] FIG. 1 is a perspective view illustrating an air-blowing device for vehicle air conditioning according to a first embodiment of the present invention.
[FIG. 2] FIG. 2 is a longitudinal sectional view illustrating the vehicle air-conditioning air blower.
[FIG. 3] FIG. 3 is a cross-sectional view taken along line III-III in FIG. 2.
[FIG. 4] FIG. 4 is an enlarged perspective view illustrating the vicinity of an upper air passage, viewed from a downstream side.
[FIG. 5] FIG. 5 corresponds to FIG. 4 and illustrates the vicinity of an upper air passage according to a second embodiment.
[FIG. 6] FIG. 6 is a perspective view illustrating an upper air passage case part according to the second embodiment, viewed from a left side.
[FIG. 7] FIG. 7 is a cross-sectional view taken along line VII-VII in FIG. 6.
[FIG. 8] FIG. 8 is a perspective view illustrating a partition plate according to the second embodiment, viewed from a left side.
[FIG. 9] FIG. 9 is a plan view illustrating a partition plate according to the second embodiment.

### DESCRIPTION OF EMBODIMENT

### (First Embodiment)

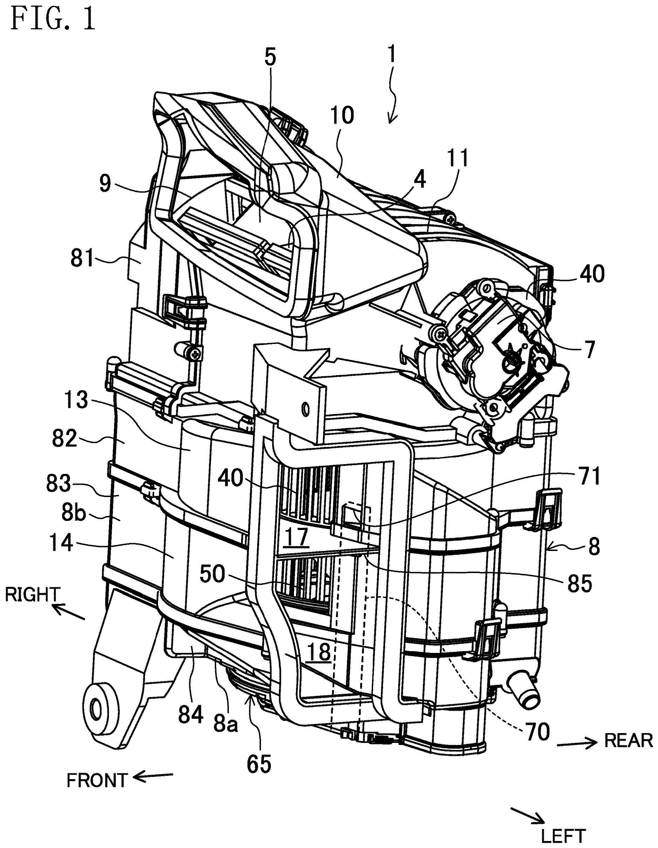

FIG. 1 is a sectional view illustrating an air-blowing device 1 for vehicle air conditioning according to a first embodiment of the present invention. This air-blowing device 1 for vehicle air conditioning is disposed, for example, inside a cabin of an automobile to blow air for air conditioning and constitutes a vehicle air conditioner together with a not-shown air conditioning unit (temperature adjusting unit) (not shown).The air conditioning unit includes a cooling heat exchanger, a heating heat exchanger, an air mixing damper, a blowing direction switching damper, and an air-conditioning casing which houses these components. The air for air conditioning blown from the air-blowing device 1 for vehicle air conditioning is introduced into the air-conditioning casing and passes through the cooling heat exchanger and the heating heat exchanger to generate air-conditioned wind having an intended temperature. Thereafter, the air-conditioned wind is fed to areas inside the cabin in accordance with a blowout mode selected by the blowing direction switching damper. The temperature of the air-conditioned wind is adjusted by an amount of air passing through the heating heat exchanger, which is determined by the air mixing damper.

Note that to facilitate understanding, in the following description of the embodiments, the front, rear, left, and right sides of the vehicle will be simply referred to as the "front," "rear," "left," and "right," respectively. However, these terms do not limit the present invention.

The air-blowing device 1 for vehicle air conditioning is housed inside an instrument panel (not shown) disposed in a front end portion of a cabin of the vehicle together with the air conditioning unit. The air conditioning unit is disposed in a substantially central portion of the interior of the instrument panel in a right-left direction, whereas the air-blowing device 1 for vehicle air conditioning is disposed inside the instrument panel on the passenger's side of the air conditioning unit (on the left side of the air conditioning unit in the case of a right-hand drive vehicle, or on the right side thereof in the case of a left-hand drive vehicle).In this embodiment, the case in which the air-blowing device 1 for vehicle air conditioning is disposed on the right side will be described.

### (Configuration of Vehicle)

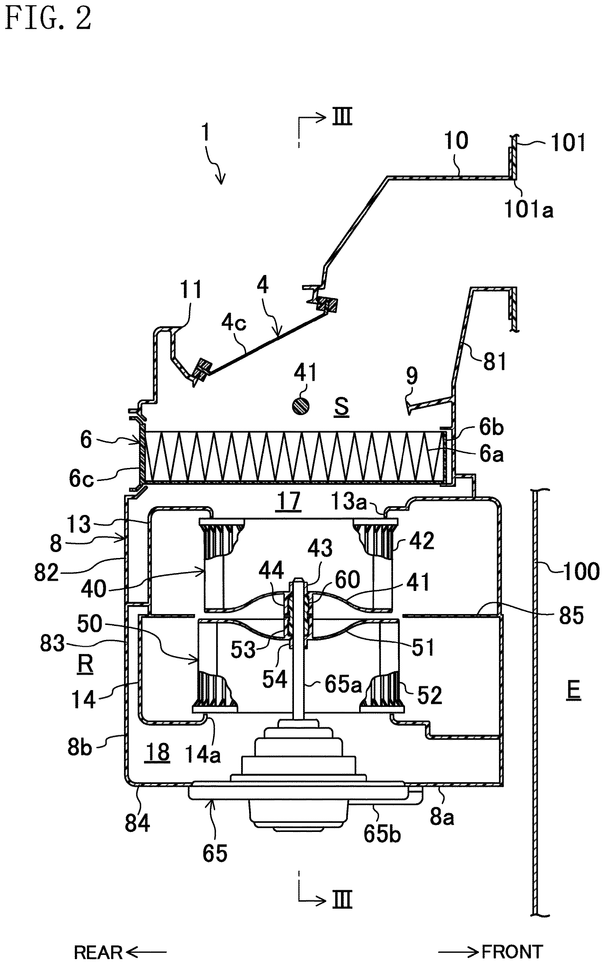

As shown in FIG. 2, a vehicle in which the air-blowing device 1 for vehicle air conditioning is disposed includes a dash panel (partition member) 100 for separating a cabin R from an engine compartment Either engine compartment E is provided in a front portion of the vehicle, and an engine, a transmission, and the like are disposed in the engine compartment Either dash panel 100 extends in a substantially up-down direction. In an upper portion of the dash panel 100, a cowl 101 which extends in a right-left direction is disposed. In the cowl 101, a communication port 101a which communicates with an outside of the cabin is formed. Since the cowl 101 is disposed outside the cabin, rain water, water upon vehicle washing, snow, or the like may enter the cowl 101.

### (Configuration of Air-Blowing Device for Vehicle Air Conditioning)

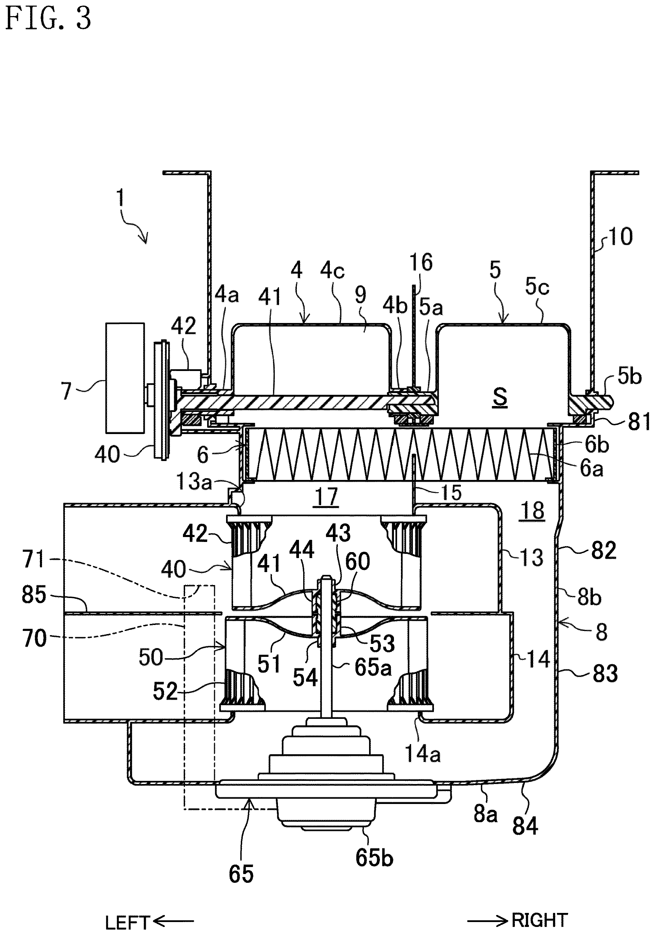

As shown also in FIG. 3, the air-blowing device 1 for vehicle air conditioning includes an upper blower fan (a first blower fan) 40, a lower blower fan (a second blower fan) 50, a coupling member 60 for coupling the blower fans 40 and 50, a motor 65 for rotationally driving the blower fans 40 and 50, a first inside/outside air switching damper 4, a second inside/outside air switching damper 5, an air filter 6, an inside/outside air switching actuator 7, and a blowing casing 8.

As shown in FIG. 1, the blowing casing 8 is constituted of an air introduction case 81, an upper air passage case part 82, a lower air passage case part 83, a lower side case part 84, and a partition plate 85.The air introduction case 81, the upper air passage case part 82, the lower air passage case part 83, the lower side case part 84, and the partition plate 85 are integrated by a fastening member and the like. Inside this blowing casing 8, the upper blower fan 40, the lower blower fan 50, the first inside/outside air switching damper 4, the second inside/outside air switching damper 5, and the air filter 6 are housed.

As shown in FIGS. 2 and 3, in a front side portion of an upper wall portion of the air introduction case 81 of the blowing casing 8, an outside air inlet 9 for introducing air outside the cabin (outside air) into the blowing casing 8 is formed. In a circumferential portion of the outside air inlet 9 of the blowing casing 8, an outside air introduction duct 10 which extends upward is provided, and an upstream end of the outside air introduction duct 10 is connected to the communication port 101a of the cowl 101.That is to say, the outside air inlet 9 communicates with the outside of the cabin via the outside air introduction duct 10 and the communication port 101a. The outside air inlet 9 can be of a long shape in the right-left direction. Rain water, water upon vehicle washing, snow, or the like may enter the outside air introduction duct 10.

In a rear side portion of an upper wall portion of the air introduction case 81 of the blowing casing 8, an inside air inlet 11 is formed in such a way as to neighbor to a rear side of the outside air inlet 9.The inside air inlet 11 opens to the interior of the cabin and is used to introduce air inside the cabin (inside air) into the blowing casing 8.The inside air inlet 11 can also be of a long shape in the right-left direction, and an opening area thereof is sufficiently ensured.

On an upper side inside a peripheral wall part 8b of the blowing casing 8, a filter housing space S in which the outside air inlet 9 and the inside air inlet 11 communicate with each other is provided. In the filter housing space S, the above-mentioned filter 6 is disposed. The filter 6 includes a pleated filter member 6a for air filtration, a frame member 6b surrounding the filter member 6a and integrated with the filter member 6a, and a lid 6c for closing a filter insertion portion of the blowing casing 8.The filter 6 is disposed in the filter housing space S in such a way as to extend substantially horizontally and is supported by an inner surface of the blowing casing 8. The filter housing space S is provided in the air introduction case 81 of the blowing casing 8.

An upper air passage (a first air passage) 17 and a lower air passage (a second air passage) 18 are formed inside the peripheral wall part 8b of the blowing casing 8 and below the filter housing space S (downstream of the filter housing space S in an airflow direction). Specifically, in the upper air passage case part 82 of the blowing casing 8, an upper scroll part 13 is formed in a portion distant from the filter housing space S in a downward direction, and in the lower air passage case part 83 thereof, a lower scroll part 14 is formed in such a way as to neighbor a lower portion of the upper scroll part 13.The upper scroll part 13 and the lower scroll part 14 are located substantially concentrically. Between the upper scroll part 13 and the lower scroll part 14, the partition plate 85 is disposed.

As shown in FIG. 3, in an upper wall portion of the upper scroll part 13, an upper bell mouth 13a opens upward. The upper bell mouth 13a is displaced leftward from a central portion of the right-left direction inside the peripheral wall part 8b of the blowing casing 8.A lower partition plate 15 projecting upward is provided on a right edge portion of the upper bell mouth 13a.The lower partition plate 15 extends to the inside of the filter housing space S and thus partitions the filter housing space S and a space downstream of the filter housing space S into two left and right subspaces. In addition, in a lower wall portion of the lower scroll part 14, a lower bell mouth 14a opens downward. The lower bell mouth 14a and the upper bell mouth 13a are located substantially concentrically.

An upper partition plate 16 is disposed inside the blowing casing 8 in such a way as to be located on an extension line upwardly extended from the lower partition plate 15.The upper partition plate 16 partitions a space upstream of the filter housing space S in the airflow direction into two left and right subspaces.

A space on the left side of the lower partition plate 15 and the upper partition plate 16 is an upstream portion of the upper air passage 17. The upstream portion of this upper air passage 17 extends to the upper bell mouth 13a.A downstream portion of the upper air passage 17 extends from the upper bell mouth 13a to the inside of the upper scroll part 13, extends in the circumferential direction inside the upper scroll part 13, and then extends leftward.

A space on the right side of the lower partition plate 15 and the upper partition plate 16 is the lower air passage 18. An upstream portion of the lower air passage 18 extends downward between a combination of the outer surfaces of the upper scroll part 13 and the lower scroll part 14 and the inner surface of the peripheral wall part 8b of the blowing casing 8 and reaches a bottom wall part 8a of the blowing casing 8.That is to say, the lower air passage 18 extends below the upper air passage 17. The upstream portion of the lower air passage 18 extends to the lower bell mouth 14a.

A downstream portion of the lower air passage 18 extends from the lower bell mouth 14a to the inside of the lower scroll part 14, extends in the circumferential direction inside the lower scroll part 14, and then extends leftward. The downstream portion of the lower air passage 18 is located below the downstream portion of the upper air passage 17.

As shown in FIG. 1, the downstream portion of the upper air passage 17 and the downstream portion of the lower air passage 18 are partitioned by the partition plate 85.

The above-mentioned motor 65 has a motor flange 65b which is fixed to the bottom wall part 8a of the blowing casing 8.An output shaft 65a of the motor 65 extends in the up-down direction and reaches, from the lower scroll part 14 of the blowing casing 8, the inside of the upper scroll part 13.A cross section of the output shaft 65a may be circular or may be substantially D-shaped, with one part of the cross section flat.

The upper blower fan 40 and the lower blower fan 50 are made of a resin material and are formed separately as individual bodies. Specifically, the whole of the upper blower fan 40 is integrally molded by using a dedicated mold and by employing an injection molding method, and the whole of the lower blower fan 50 is integrally molded by using a dedicated mold and by employing the injection molding method.

The upper blower fan 40 is a centrifugal fan and is disposed in such a way as to take a posture whose rotation center line extends in the up-down direction inside the upper scroll part 13, that is, inside the upper air passage 17.The rotating upper blower fan 40 rotates and thereby expels air drawn from above the fan radially outward.

As shown in FIG. 3, a circular plate part 41 is provided in the lower portion of the upper blower fan 40.In a circumferential rim portion of this circular plate part 41, a plurality of blades 42 extending upward are provided in such a way as to be spaced apart respectively from each other in a circumferential direction. Upper end portions of the blades 42 are connected in the circumferential direction. The circular plate part 41 is formed, such that a rotation center portion of the upper blower fan 40 is located in an uppermost portion of the circular plate part 41, and has a face which gradually curves downward from the uppermost portion thereof toward the circumferential rim portion thereof. A portion of the circular plate part 41 in the vicinity of the circumferential rim portion extends in a radial direction with respect to the rotation center line of the upper blower fan 40.A fan diameter of the upper blower fan 40 is a dimension in a diameter direction of the upper blower fan 40, and a height of the upper blower fan 40 is a dimension of the upper blower fan 40 in a center line direction of the upper blower fan 40.

In a central portion of the circular plate part 41 of the upper blower fan 40, an upper cylindrical part 43 which projects upward and whose both ends open is provided, and a lower cylindrical part 44 which projects downward and whose both ends open is provided. The upper cylindrical part 43 and the lower cylindrical part 44 are located concentrically with the rotation center line of the upper blower fan 40, and a lower end portion of the upper cylindrical part 43 and an upper end portion of the lower cylindrical part 44 communicate with each other. A diameter of the upper cylindrical part 43 is smaller than a diameter of the lower cylindrical part 44.A length of the lower cylindrical part 44 in the center line direction is longer than a length of the upper cylindrical part 43 in the center line direction.

As shown in FIGS. 1 and 2, the above-mentioned lower blower fan 50 is a centrifugal fan and is disposed in such a way as to take a posture whose rotation center line extends in the up-down direction inside the lower scroll part 14, that is, inside the lower air passage 18.The lower blower fan 50 rotates and thereby expels air drawn from below the fan radially outward.

As shown in FIG. 3, a circular plate part 51 is provided in the upper portion of the lower blower fan 50. As shown in FIGS. 1 and 2, the circular plate part 51 of the lower blower fan 50 and the circular plate part 41 of the upper blower fan 40 face each other with a predetermined gap therebetween in the up-down direction. In a circumferential rim portion of the circular plate part 51 of the lower blower fan 50, a plurality of blades 52 extending downward are provided in such a way as to be spaced apart respectively from each other in a circumferential direction. Lower end portions of the blades 52 are connected in the circumferential direction. The circular plate part 51 is formed, such that a rotation center portion of the lower blower fan 50 is located in a lowermost position of the circular plate part 51, and has a face which gradually curves upward from the lowermost portion thereof toward the circumferential rim portion thereof. A portion of the circular plate part 51 in the vicinity of the circumferential rim portion extends in a radial direction with respect to the rotation center line of the lower blower fan 50.A fan diameter of the lower blower fan 50 is a dimension in a diameter direction of the lower blower fan 50, and a height of the lower blower fan 50 is a dimension of the lower blower fan 50 in a center line direction.

As shown in FIG. 3, in a central portion of the circular plate part 51 of the lower blower fan 50, an upper cylindrical part 53 which projects upward and whose both ends open is provided, and a lower cylindrical part 54 which projects downward and whose both ends open is provided. The upper cylindrical part 53 and the lower cylindrical part 54 are located concentrically with the rotation center line of the lower blower fan 50, and a lower end portion of the upper cylindrical part 53 and an upper end portion of the lower cylindrical part 54 communicate with each other. A diameter of the lower cylindrical part 54 is smaller than a diameter of the upper cylindrical part 53.A length of the upper cylindrical part 53 in the center line direction is longer than a length of the lower cylindrical part 54 in the center line direction.

The coupling member 60 is configured by a cylindrical member which is inserted into the lower cylindrical part 44 of the upper blower fan 40 and the upper cylindrical part 53 of the lower blower fan 50 and extends in the up-down direction along a center line of the output shaft 65a of the motor 65. This coupling member 60 is formed by injection molding and made of a resin material whose strength is higher than a strength of the resin material of which the upper blower fan 40 and the lower blower fan 50 are made.

As shown in FIG. 3, the output shaft 65a of the motor 65 in inserted into, and fitted to, the coupling member 60.In the fitted state, relative rotation of the output shaft 65a and the coupling member 60 is suppressed.

### (Configuration of Inside/Outside Air Switching Damper)

The first and second inside/outside air switching dampers 4 and 5 shown in FIGS. 2 and 3 operate independently and are both rotary dampers, each of which opens and closes the outside air inlet 9 and the inside air inlet 11.The first inside/outside air switching damper 4 is disposed upstream of the upper air passage 17. Opening and closing the outside air inlet 9 and the inside air inlet 11 allows either only outside air or only inside air, or both, which is/are optionally selected, to flow into the upper air passage 17.The second inside/outside air switching damper 5 is disposed upstream of the lower air passage 18. Opening and closing the outside air inlet 9 and the inside air inlet 11 allows either only outside air or only inside air, or both, which is/are optionally selected, to flow into the lower air passage 18.

Specifically, a left end portion of the first inside/outside air switching damper 4 is provided with a left cylindrical part 4a, and a right end portion thereof is provided with a right cylindrical part 4b.The left cylindrical part 4a and the right cylindrical part 4b extend in the right-left direction and are located concentrically. A portion of the first inside/outside air switching damper 4 between the left cylindrical part 4a and the right cylindrical part 4b is configured as a closing plate part 4c which extends in the right-left direction to connect the left cylindrical part 4a and the right cylindrical part 4b together. The left cylindrical part 4a and the right cylindrical part 4b are pivotably supported by the blowing casing 8.Thus, the closing plate part 4c pivots in a front-rear direction around its center line extending in the right-left direction.

As shown in FIGS. 2 and 3, when the closing plate part 4c pivots rearward, the outside air inlet 9 is fully opened and the inside air inlet 11 is fully closed, and only the outside air is thereby introduced. On the other hand, although it is not shown, when the closing plate part 4c pivots frontward, the outside air inlet 9 is fully closed and the inside air inlet 11 is fully opened, and only the inside air is thereby introduced. In addition, by stopping the closing plate part 4c in a middle position, the outside air inlet 9 and the inside air inlet 11 are opened, and the outside air and the inside air are thereby introduced. The left cylindrical part 4a penetrates through the peripheral wall part 8b of the blowing casing 8 and projects outward. The driving force of the inside/outside air switching actuator 7 is transmitted via a transmission member 42 to the left cylindrical part 4a, whereby the first inside/outside air switching damper 4 pivots.

The second inside/outside air switching damper 5 basically has the same or similar configuration as or to the first inside/outside air switching damper 4 and includes a left shaft part 5a extending leftward, a right shaft part 5b extending rightward, and a closing plate part 5c. The closing plate part 5c pivots frontward or rearward around its center line extending in the right-left direction, whereby switching to any of a state in which only the outside air is introduced, a state in which only the inside air is introduced, and a state in which the outside air and the inside air are introduced is made. The left shaft part 5a and the right shaft part 5b are pivotably supported by the blowing casing 8. A right end portion of a drive shaft 41 extending in the right-left direction is coupled to the left shaft part 5a such that the drive shaft 35 cannot rotate relative to the left shaft part 5a.The driving force of the inside/outside air switching actuator 7 is transmitted via a link member 40 to the drive shaft 41, whereby the second inside/outside air switching damper 5 pivots. Note that the driving force is transmitted separately to the first and second inside/outside air switching dampers 4 and 5. This transmission is achieved by, for example, a well-known linkage mechanism. Further, the first and second inside/outside air switching dampers 4 and 5 can also be driven by separate actuators.

### (Configuration of Cooling Air Passage 70)

As shown in FIGS. 1 and 3, the blowing casing 8 includes therein a cooling air passage 70 for supplying cooling air to the motor 65.The cooling air passage 70 can be formed, for example, inside a duct formed integrally with the blowing casing 8 or can be formed inside a duct constituted of a member formed separately from the blowing casing 8.The downstream end of the cooling air passage 70 communicates with the inside of the motor 65.Since a communication structure of the downstream end of the cooling air passage 70 is conventionally well-known, detailed description therefor is omitted.

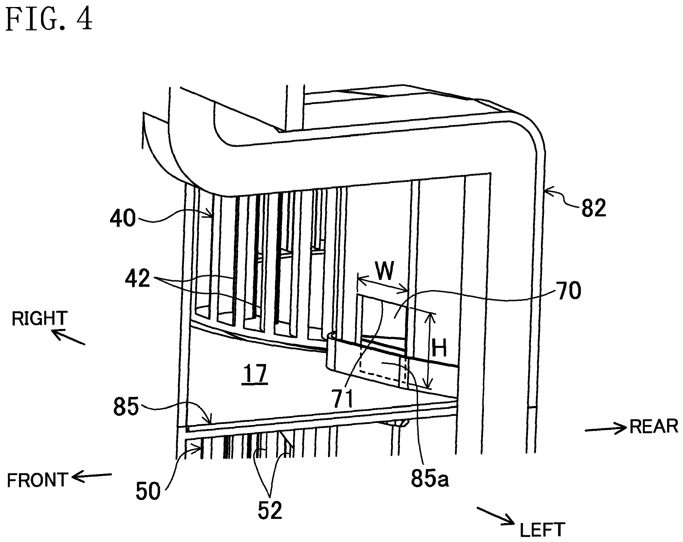

As shown in FIGS. 1 and 3, the cooling air passage 70 can be formed in such a way as to extend in the up-down direction. The upstream end (upper end) of the cooling air passage 70 communicates with the upper air passage 17. That is to say, as shown in FIG. 4, an opening part 71 of the upstream end of the cooling air passage 70 provided above the partition plate 85 and is open in a side wall portion of the blowing casing 8, which extends in the up-down direction. Specifically, the opening part 71 opens in a side wall portion of the upper air passage case part 82.The opening part 71 opens in such a way as to face a downstream side of the upper air passage 17, that is, a portion thereof extending leftward, and air flowing on the downstream side of the upper air passage 17 flows in the opening part 71.

As shown in FIG. 4, the opening part 71 of the upstream end of the cooling air passage 70 has a predetermined width dimension W in a longitudinal direction of the upper air passage 17 and has a predetermined height dimension H in a height direction of the upper air passage 17.The width dimension W and the height dimension H can be optionally set and are set to obtain an opening area which allows a sufficient amount of the cooling air to be introduced.

A lower edge portion of the opening part 71 at an upstream end of the cooling air passage 70 is located at the substantially same height as a height of an upper surface of the partition plate 85.In this embodiment, the partition plate 85 of the blowing casing 8 is provided with a lower longitudinal plate part 85a covering a lower portion of the opening part 71 of the upstream end of the cooling air passage 70.The lower longitudinal plate part 85a projects upward from the upper surface of the partition plate 85 and extends along an air flow direction in the upper air passage 17.A height dimension of the lower longitudinal plate part 85a is set shorter than the height dimension H of the opening part 71. An upper edge portion of the lower longitudinal plate part 85a is located lower than a central portion of the opening part 71 in the up-down direction. Thus, an area of the opening part 71, which is closed by the lower longitudinal plate part 85a, becomes sufficiently small, thereby allowing adverse influence to be hardly exerted on entrainment of the cooling air.

In addition, a length of the lower longitudinal plate part 85a is set longer than the width dimension W of the upper air passage 17.The length of the lower longitudinal plate part 85a can also be set to be the same as the width dimension W of the upper air passage 17.

### (Advantages of Embodiment)

With the air-blowing device 1 for vehicle air conditioning mounted in a vehicle, by independently actuating the first inside/outside air switching damper 4 and the second inside/outside air switching damper 5, optionally selected is any one of the outside air introduction mode in which the outside air is introduced into the upper air passage 17 and the lower air passage 18, the inside air circulation mode in which the inside air is introduced into the upper air passage 17 and the lower air passage 18, and the inside/outside air double flow mode in which the outside air is introduced into the upper air passage 17 and the inside air is introduced into the lower air passage 18.Switching among the inside air circulating mode, the outside air introducing mode, and the inside/outside air double flow mode is made by a conventionally well-known automatic air conditioner control. By selecting the inside/outside air double flow mode, while outside air which is relatively dry in winter is supplied to a defrost outlet and a windshield is thereby defogged in an excellent manner, relatively warm inside air is supplied to a heat outlet, thereby allowing heating efficiency to be enhanced.

Since the cooling air passage 70 which supplies the cooling air to the motor 65 communicates with the upper air passage 17, the air flowing in the upper air passage 17 is supplied to the motor 65.In the inside/outside air double flow mode, during heating, the outside air is introduced into the upper air passage 17, and a temperature of this outside air is low, as compared with that of the inside air. Accordingly, since the cooling air having the low temperature is supplied to the motor 65, performance for cooling the motor 65 is enhanced.

Since the cooling air passage 70 communicates with the upper air passage 17, water accumulated in the lower air passage 18 does not flow in the motor 65, and the water is inhibited from entering the motor 65.

Assuming a case in which the water has entered the inside of the upper air passage 17, a flow of the water inside the upper air passage 17 is blocked by the lower longitudinal plate part 85a.In addition, even if the water has accumulated on an upper surface of the partition plate 85, the water is less likely to flow toward the opening part 71 of the upstream end of the cooling air passage 70. Accordingly, the water can be inhibited from entering the motor 65.

For example, in processes of developing vehicles, depending on vehicle models, in each of which the air-blowing device 1 for vehicle air conditioning is mounted, dimensions such as a fan diameter, a fan height, and the like of one of the upper blower fan 40 and the lower blower fan 50 may be changed. In this embodiment, since the upper blower fan 40 and the lower blower fan 50 are the separate bodies, even if the dimensions of the one of the upper blower fan 40 and the lower blower fan 50 are changed, no influence is exerted on the other blower fan and it is not required to newly provide another blower fan, thereby allowing the dimensions to be changed at low costs. Since the upper blower fan 40 and the lower blower fan 50 are the separate bodies, a slide mold used in integral molding is not needed, thereby allowing mold costs to be reduced.

### (Second Embodiment)

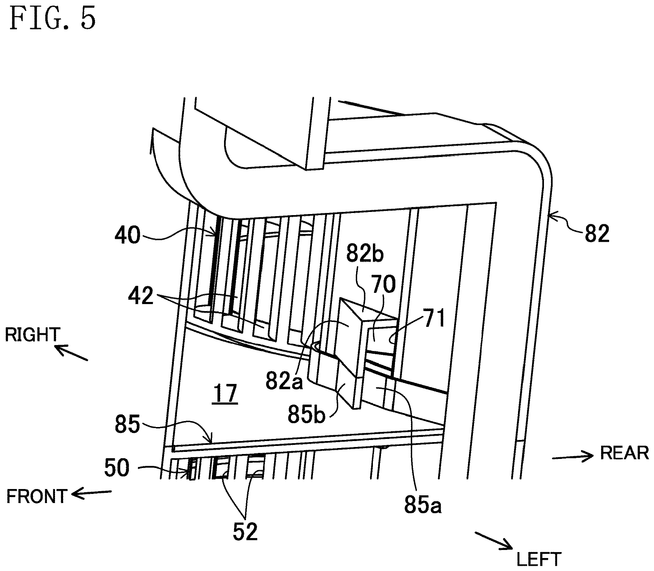

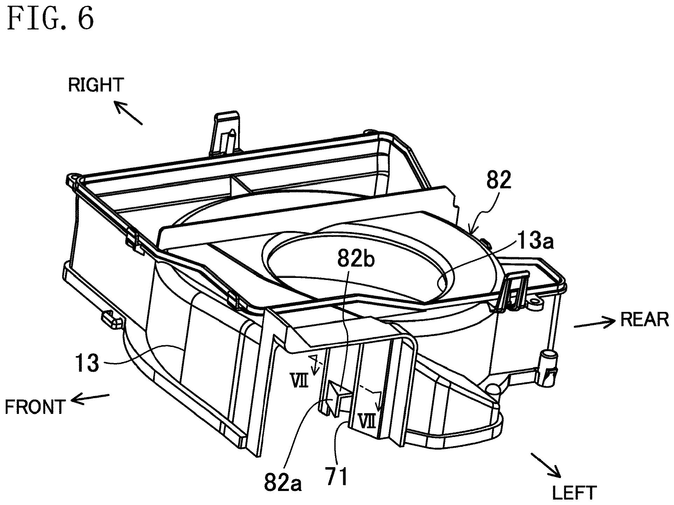

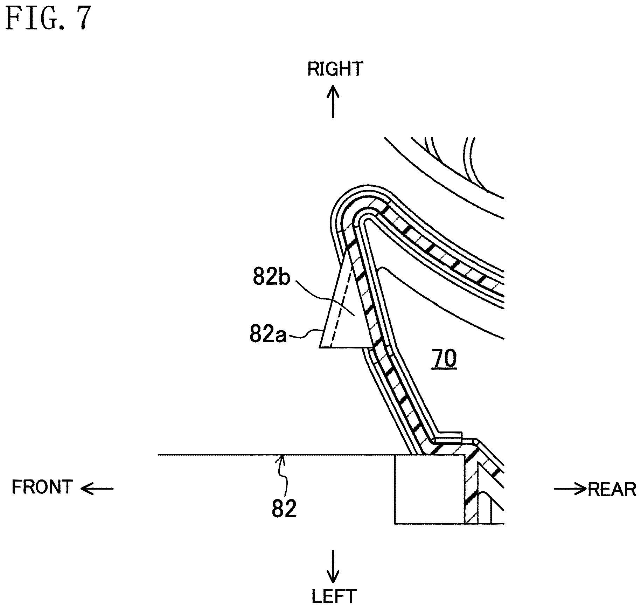

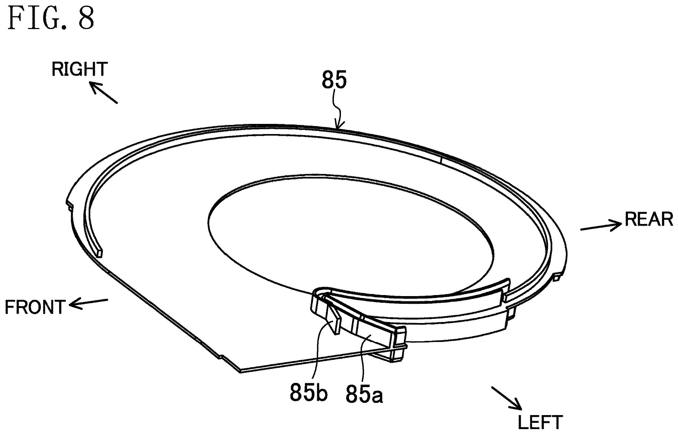

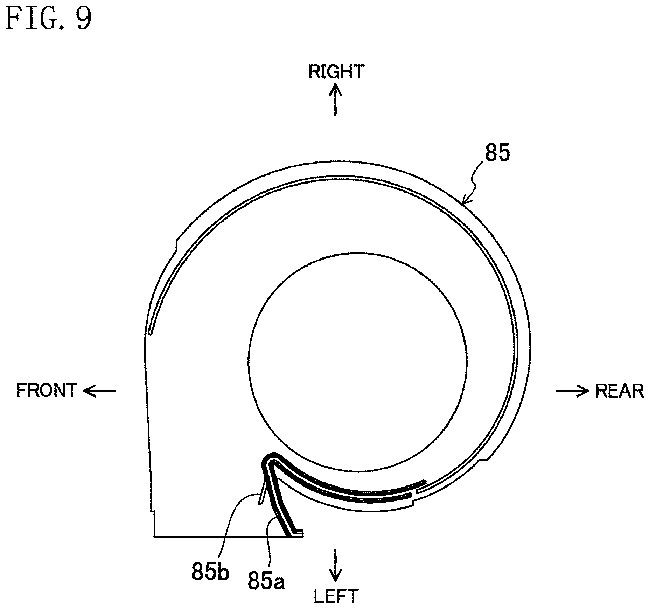

Each of FIGS. 5 to 9 is a diagram showing a second embodiment of the present invention. In the second embodiment, a structure in which water is prevented from entering a cooling air passage 70 is different from that in the first embodiment, and the other components are the same as those in the first embodiment. Therefore, the same components as in the first embodiment are denoted by the same reference characters, and the description therefor is omitted, and the following description will focus on only differences from the first embodiment.

In the second embodiment, in a blowing casing 8, an upper longitudinal plate part 82a which covers an upper portion of an opening part 71 on an upstream end of the cooling air passage 70 is provided. The upper longitudinal plate part 82a is formed integrally with a side wall portion of an upper air passage case part 82 and extends from an edge portion of the opening part 71 on the upstream end of the cooling air passage 70.Specifically, a base end portion of the upper longitudinal plate part 82a connects to an edge portion of the opening part 71 upstream of a flow direction in an upper air passage 17. The upper longitudinal plate part 82a extends from the edge portion of the opening part 71 upstream of the flow direction in the upper air passage 17 toward a downstream side and is inclined with respect to a mainstream direction in such a way as to approach a front side (a side away from the opening part 71) toward a downstream side.

In the second embodiment, in the blowing casing 8, an upper plate part 82b which extends from an upper edge of the opening part 71 on an upstream end of the cooling air passage 70 toward the inside of the upper air passage 17 is provided. The upper plate part 82b extends from the upper edge of the opening part 71 to an upper edge of the upper longitudinal plate part 82a and is a coupling wall portion which couples an inner wall of the upper air passage 17 and the upper edge of the upper longitudinal plate part 82a.A width of the upper plate part 82b corresponds to the inclination of the upper longitudinal plate part 82a and increases toward the downstream side in the flow direction of the upper air passage 17.

In the second embodiment, on a partition plate 85 of the blowing casing 8, a lower inclining plate part 85b is provided. The lower inclining plate part 85b projects upward from an upper surface of the partition plate 85.The lower inclining plate part 85b is located immediately beneath the upper longitudinal plate part 82a and inclines with respect to a mainstream direction in the upper air passage 17, as with the upper longitudinal plate part 82a.An upper edge of the lower inclining plate part 85b and a lower edge of the upper longitudinal plate part 82a can be abutted on each other.

In this second embodiment, since the cooling air passage 70 which supplies cooling air to the motor 65 communicates with the upper air passage 17, advantages similar to those attained by the first embodiment can be exhibited. In addition, if water has entered the inside of the upper air passage 17, a flow of the water can be blocked by the upper longitudinal plate part 82a, so that the water is less likely to flow toward the upper air passage 17 of the upstream end of the cooling air passage 70.

Furthermore, in the above-described first and second embodiments, the case in which the present invention is applied to a semi-center unit in which the air-blowing device 1 for vehicle air conditioning is disposed in front of a passenger seat is described. However, the present invention is not limited thereto. The present invention may be applied to a full-center unit in which the air-blowing device 1 for vehicle air conditioning is disposed in a central portion of a vehicle in a right-left direction.

Alternatively, the air-blowing device 1 for vehicle air conditioning and an air conditioning unit may be integrated with each other.

### INDUSTRIAL APPLICABILITY

As described hereinbefore, an air-blowing device for vehicle air conditioning according to the present invention may be used, for example, as an air blower unit for a vehicle air conditioner.

### DESCRIPTION OF REFERENCE CHARACTERS

- 1: Air-Blowing Device for Vehicle Air Conditioning
- 4: First Inside/Outside Air Switching Damper
- 5: Second Inside/Outside Air Switching Damper
- 8: Blowing Casing
- 9: Outside Air Inlet
- 11: Inside Air Inlet
- 17: Upper Air Passage
- 18: Lower Air Passage
- 40: Upper Blower Fan
- 50: Lower Blower Fan
- 65: Motor
- 70: Cooling Air Passage
- 71: Opening Part
- 82a: Upper Longitudinal Plate Part
- 82b: Upper Plate Part
- 85: Partition Plate
- 85a: Lower Longitudinal Plate Part

## Claims

1. An air-blowing device for vehicle air conditioning (1), the air-blowing device (1) comprising: a casing (8) including an inside air inlet (11) through which air inside a cabin is introduced into the casing (8), and an outside air inlet (9) through which air outside the cabin is introduced into the casing (8), the inside air inlet (11) and the outside air inlet (9) opening to outside, the casing (8) including, when mounted in a vehicle, an upper air passage (17) and a lower air passage (18) each communicating with both of the inside air inlet (11) and the outside air inlet (9), and the casing (8) including an inside/outside air switching damper (4, 5) that opens and closes the inside air inlet (11) and the outside air inlet (9);
an upper blower fan (40) disposed in the upper air passage (17), with a rotation center line of the upper blower fan (40) extending in an up-down direction;
a lower blower fan (50) disposed in the lower air passage (18), with a rotation center line of the lower blower fan (50) extending in the up-down direction; and
a motor (65) rotationally driving the upper blower fan (40) and the lower blower fan (50), wherein
air inside the upper air passage (17) is blown as air for air conditioning by the upper blower fan (40), and air inside the lower air passage (18) is blown as the air for air conditioning by the lower blower fan (50), **characterized in that** an upstream end of a cooling air passage (70) communicates with the upper air passage (17), the cooling air passage (70) supplying cooling air to the motor (65).

2. The air-blowing device for vehicle air conditioning (1) of claim 1, wherein
the upstream end of the cooling air passage (70) has an opening part (71) in a side wall portion of the casing (8).

3. The air-blowing device for vehicle air conditioning (1) of claim 2, wherein
the casing (8) is provided with a lower longitudinal plate part (85a) covering a lower portion of the opening part (71) at the upstream end of the cooling air passage (70).

4. The air-blowing device for vehicle air conditioning (1) of claim 3, wherein
the casing (8) is provided with a partition plate (85) partitioning an inside of the casing (8) into the upper air passage (17) and the lower air passage (18), and
the partition plate (85) is provided with the lower longitudinal plate part (85a).

5. The air-blowing device for vehicle air conditioning (1) of claim 2, wherein
the casing (8) is provided with an upper longitudinal plate part (82a) covering an upper portion of the opening part (71) at the upstream end of the cooling air passage (70).

6. The air-blowing device for vehicle air conditioning (1) of claim 5, wherein
the upper longitudinal plate part (82a) is formed in such a way as to extend from an edge portion of the opening part (71) at the upstream end of the cooling air passage (70).

7. The air-blowing device for vehicle air conditioning (1) of claim 5, wherein
an upper plate part (82b) is formed in the casing (8), the upper plate part (82b) extending from an upper edge of the opening part (71) at the upstream end of the cooling air passage (70) toward an inside of the upper air passage (17).

## Patentansprüche

1. Luftblasvorrichtung für Fahrzeugklimatisierung (1), wobei die Luftblasvorrichtung (1) Folgendes umfasst: ein Gehäuse (8), das einen inneren Lufteinlass (11) beinhaltet, durch den Luft innerhalb einer Fahrgastzelle in das Gehäuse (8) eingeführt wird, und einen äußeren Lufteinlass (9), durch den Luft außerhalb der Fahrgastzelle in das Gehäuse (8) eingeführt wird, wobei sich der innere Lufteinlass (11) und der äußere Lufteinlass (9) nach außen öffnen, wobei das Gehäuse (8), wenn es in einem Fahrzeug montiert ist, einen oberen Luftdurchlass (17) und einen unteren Luftdurchlass (18) beinhaltet, die jeweils mit beiden von dem inneren Lufteinlass (11) und dem äußeren Lufteinlass (9) verbunden sind, und das Gehäuse (8) eine innere/ äußere Luftschaltdrossel (4, 5) beinhaltet, die den inneren Lufteinlass (11) und den äußeren Lufteinlass (9) öffnet und schließt;
ein oberes Fördergebläse (40), das in dem oberen Luftdurchlass (17) angeordnet ist, mit einer Drehmittellinie des oberen Fördergebläses (40), die sich in einer Richtung von oben nach unten erstreckt;
ein unteres Fördergebläse (50), das in dem unteren Luftdurchlass (18) angeordnet ist, mit einer Drehmittellinie des unteren Fördergebläses (50), die sich in einer Richtung von oben nach unten erstreckt; und
einen Motor (65), der das obere Fördergebläse (40) und das untere Fördergebläse (50) in Drehung antreibt, wobei
Luft innerhalb des oberen Luftdurchlasses (17) als Luft für die Klimatisierung durch das obere Fördergebläse (40) geblasen wird, und Luft innerhalb des unteren Luftdurchlasses (18) als Luft für die Klimatisierung durch das untere Fördergebläse (50) geblasen wird, **dadurch gekennzeichnet, dass**
ein stromaufwärtiges Ende eines Kühlluftdurchlasses (70) mit dem oberen Luftdurchlass (17) verbunden ist, wobei der Kühlluftdurchlass (70) Kühlungsluft zum Motor (65) zuführt.

2. Luftblasvorrichtung für Fahrzeugklimatisierung (1) nach Anspruch 1, wobei das stromaufwärtige Ende des Kühlluftdurchlasses (70) einen Öffnungsteil (71) in einem Seitenwandabschnitt des Gehäuses (8) aufweist.

3. Luftblasvorrichtung für Fahrzeugklimatisierung (1) nach Anspruch 2, wobei das Gehäuse (8) mit einem unteren länglichen flachen Teil (85a) bereitgestellt ist, der einen unteren Abschnitt des Öffnungsteils (71) an dem stromaufwärtigen Ende des Kühlluftdurchlasses (70) abdeckt.

4. Luftblasvorrichtung für Fahrzeugklimatisierung (1) nach Anspruch 3, wobei das Gehäuse (8) mit einer Trennplatte (85) bereitgestellt ist, die eine Innenseite des Gehäuses (8) in den oberen Luftdurchlass (17) und den unteren oberen Luftdurchlass (18) trennt, und
die Trennplatte (85) mit dem unteren länglichen flachen Teil (85a) bereitgestellt ist.

5. Luftblasvorrichtung für Fahrzeugklimatisierung (1) nach Anspruch 2, wobei das Gehäuse (8) mit einem oberen länglichen flachen Teil (82a) bereitgestellt ist, der einen oberen Abschnitt des Öffnungsteils (71) an dem stromaufwärtigen Ende des Kühlluftdurchlasses (70) abdeckt.

6. Luftblasvorrichtung für Fahrzeugklimatisierung (1) nach Anspruch 5, wobei der obere längliche flache Teil (82a) derart gebildet ist, um sich von einem Randabschnitt des Öffnungsteils (71) an dem stromaufwärtigen Ende des Kühlluftdurchlasses (70) zu erstrecken.

7. Luftblasvorrichtung für Fahrzeugklimatisierung (1) nach Anspruch 5, wobei ein oberer flacher Teil (82b) in dem Gehäuse (8) gebildet ist, wobei sich der obere flache Teil (82b) von einem oberen Rand des Öffnungsteils (71) an dem stromaufwärtigen Ende des Kühlluftdurchlasses (70) zu einer Innenseite des oberen Luftdurchlasses (17) erstreckt.

## Revendications

1. Dispositif de soufflage d'air pour climatisation de véhicule (1), le dispositif de soufflage d'air (1) comprenant : un boîtier (8) comportant une entrée d'air intérieur (11) à travers laquelle l'air à l'intérieur d'un habitacle est introduit dans le boîtier (8), et une entrée d'air extérieur (9) à travers laquelle l'air à l'extérieur de l'habitacle est introduit dans le boîtier (8), l'entrée d'air intérieur (11) et l'entrée d'air extérieur (9) s'ouvrant vers l'extérieur, le boîtier (8) comportant, lorsqu'il est monté dans un véhicule, un passage d'air supérieur (17) et un passage d'air inférieur (18) communiquant chacun avec à la fois l'entrée d'air intérieur (11) et l'entrée d'air extérieur (9), et le boîtier (8) comportant un registre de commutation d'air intérieur/extérieur (4, 5) qui ouvre et ferme l'entrée d'air intérieur (11) et l'entrée d'air extérieur (9) ;
un ventilateur soufflant supérieur (40) disposé dans le passage d'air supérieur (17), avec une ligne centrale de rotation du ventilateur soufflant supérieur (40) s'étendant dans une direction haut-bas ;
un ventilateur soufflant inférieur (50) disposé dans le passage d'air inférieur (18), avec une ligne centrale de rotation du ventilateur soufflant inférieur (50) s'étendant dans la direction haut-bas ; et
un moteur (65) entraînant en rotation le ventilateur soufflant supérieur (40) et le ventilateur soufflant inférieur (50), où
l'air à l'intérieur du passage d'air supérieur (17) est soufflé comme l'air pour la climatisation par le ventilateur soufflant supérieur (40), et l'air à l'intérieur du passage d'air inférieur (18) est soufflé comme l'air pour la climatisation par le ventilateur soufflant inférieur (50), **caractérisé en ce que**
une extrémité amont d'un passage d'air de refroidissement (70) communique avec le passage d'air supérieur (17), le passage d'air de refroidissement (70) fournissant de l'air de refroidissement au moteur (65).

2. Dispositif de soufflage d'air pour climatisation de véhicule (1) de la revendication 1, dans lequel
l'extrémité amont du passage d'air de refroidissement (70) a une partie d'ouverture (71) dans une portion de paroi latérale du boîtier (8).

3. Dispositif de soufflage d'air pour climatisation de véhicule (1) de la revendication 2, dans lequel
le boîtier (8) est pourvu d'une partie de plaque longitudinale inférieure (85a) couvrant une portion inférieure de la partie d'ouverture (71) au niveau de l'extrémité amont du passage d'air de refroidissement (70).

4. Dispositif de soufflage d'air pour climatisation de véhicule (1) de la revendication 3, dans lequel
le boîtier (8) est pourvu d'une plaque de séparation (85) séparant l'intérieur du boîtier (8) en le passage d'air supérieur (17) et le passage d'air inférieur (18), et
la plaque de séparation (85) est pourvue de la partie de plaque longitudinale inférieure (85a).

5. Dispositif de soufflage d'air pour climatisation de véhicule (1) de la revendication 2, dans lequel
le boîtier (8) est pourvu d'une partie de plaque longitudinale supérieure (82a) couvrant une portion supérieure de la partie d'ouverture (71) au niveau de l'extrémité amont du passage d'air de refroidissement (70).

6. Dispositif de soufflage d'air pour climatisation de véhicule (1) de la revendication 5, dans lequel
la partie de plaque longitudinale supérieure (82a) est formée de manière à s'étendre à partir d'une portion de bord de la partie d'ouverture (71) au niveau de l'extrémité amont du passage d'air de refroidissement (70).

7. Dispositif de soufflage d'air pour climatisation de véhicule (1) de la revendication 5, dans lequel
une partie de plaque supérieure (82b) est formée dans le boîtier (8), la partie de plaque supérieure (82b) s'étendant à partir d'un bord supérieur de la partie d'ouverture (71) au niveau de l'extrémité amont du passage d'air de refroidissement (70) vers l'intérieur du passage d'air supérieur (17).
